# EUROPEAN PATENT SPECIFICATION

(11) **EP 2 854 383 B1**
(45) Date of publication and mention of the grant of the patent: **30.11.2016**
(21) Application number: 13306333.9
(22) Date of filing: 27.09.2013
(51) Int. Cl.: H04M 19/04, H04M 1/725

(54) **Method And Devices For Attention Alert Actuation**
Verfahren und Vorrichtungen zur Aufmerksamkeitsalarmauslösung
Procédé et dispositifs d'activation d'alerte de l'attention

(43) Date of publication of application: 01.04.2015
(73) Proprietor: ALCATEL LUCENT, 92100 Boulogne-Billancourt (FR)
(72) Inventor: Tytgat, Donny, 2018 Antwerpen (BE); Lievens, Sammy, 2018 Antwerpen (BE); Aerts, Maarten, 2018 Antwerpen (BE); Namboodiri, Vinay, 2018 Antwerpen (BE)
(74) Representative: ALU Antw Patent Attorneys

(56) References cited:
- WO-A1-2008/075082
- US-A1- 2008 125 184
- US-A1- 2013 057 394
- US-A1- 2013 179 107

## Description

The present invention relates to a method for attention alert actuation, more in particular to conveying an attention alert signal received by an end-user device in the most appropriate manner.

Currently, alerts for informing a user of a certain event as a part of a service, can be sent through legacy systems that are available on mobile devices, e.g. on smart phones. For example, the operating system of such a device, may enable scuh an alert to be sent through the notifications subsystem of this device. This solution is however not flexible as it does not offer any adaptation with regards to the actuator that should be used in what context. As many actuators might be available on the device, ranging from the display, over a loudspeaker, vibrating function, etc. , a method is needed for determining which actuator should be chosen when, whilst considering preferences that can be received from the alert source.

r Prior art examples are disclosed by WO2008/075082 and US2008/125184.

According to embodiments of the present invention this object is achieved by the provision of a method for selecting and activating at least one actuator of an end-user device upon receipt of an alert signal by this end-user device, said method comprising the steps as set out in claim 1.

In this way a method is provided for determining the optimum actuator or actuators available on the device for the service related to the alert signal. In this way the complete service experience is optimized together with the local end-user experience. This enables the necessary trade-offs to be made with regards to what actuator to be used under what circumstances.

In the context of this patent application the meaning of the word "actuator" is thus to be understood as any output module of the end-user device which is adapted to inform a user of this device of an event related to a specific service.

In an embodiment the alert source can also contain actuator preferences by incorporation this information within the alert signal.

In an embodiment the determination further makes use of current usage statistics and user scenario estimates to assess what the best actuator is for the job.

The value of the system is that it enables attention alerts to be communicated to the end-user in an adaptive, context sensitive manner taking into account both global (attention-alert-system level) and local (mobile device level) preferences and usage statistics.

The present invention relates as well to embodiments of an end-user device adapted to perform the above mentioned embodiments of the method.

In a particular embodiment the end-user device is communicatively coupled to a video conferencing system, said end-user device being adapted to register itself to said video conferencing system, and to indicate by the provision of a signal that the user of said end-user device desires to be alerted upon being watched by another participant in another location of a video conference in which said user is involved, said end-user device being further adapted to identify whether a signal received from said video conferencing system concerns a trigger signal being indicative of said user of said end-user device being watched by another participant in another location of said video conference, and, if so, to activate an actuating means within said end-user device, in accordance with the above mentioned methods.

In an embodiment this end-user device is a mobile device such as a mobile phone or a laptop or a gaming console or an intelligent watch, intelligent patch on clothing, intelligent jewelry etc.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 depicts an embodiment of an end-user mobile device capable of performing the method
Fig. 2 shows a flowchart of an embodiment of the method
Fig. 3 shows an exemplary situation of a video conference taking place between a first plurality of participants being distributed over a second plurality of locations, wherein a mobile device is communicatively coupled with a video conferencing system, the system being adapted to inform a participant of this video conference of being watched by another participant of the video conference in another location via providing of an alert signal to the end-user mobile device.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

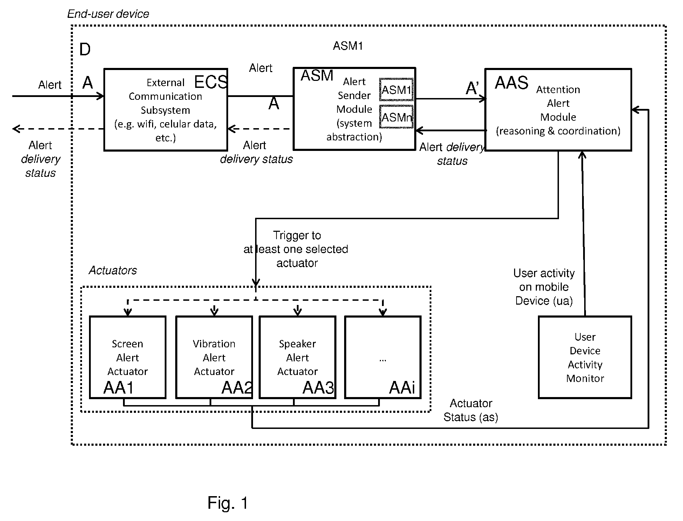

Fig. 1 depicts an embodiment of an end-user device D adapted to select the most appropriate alert actuator from a plurality of actuators, in response to receiving an alert signal from an external system or device. This other device may concern a service server, upon which an application can run, to which application a user can subscribe, and which application also involves alerting this user by providing a service alert signal to the end-user device D of this user. This end-user device can range from being a mobile phone, a video receiver, a laptop, a game console, an intelligent watch, an intelligent pin, a household apparatus, a radio etc. In general any end-user device able to communicate with an alerting service server and containing a plurality of actuators which can be selected based on embodiments of the method which are going to be explained in the next paragraphs, can be an embodiment of an end-user device according to the invention. In general the user of end-user device previously registered his/her device to be the receiver of the service-specific alert, provided by the service or application server.

The end-user device D, comprises a number of actuators exemplary denoted AA1, AA2, AA3, to AAi. In case of a mobile phone these may e.g. correspond to a pop-up generator on the screen , a vibration module and an audio module generating a specific signal relative to the service alert to the loudspeaker. In the context of this patent application the meaning of the word "actuator" is thus to be understood as any output module of the end-user device which is adapted to inform a user of this device of an event related to a specific service. This actuator can thus be the screen together with the driving control module for generating e.g. a pop-up on this screen. Alternatively it can be the loudspeaker in conjunction with a module playing a specific tone or audio message, for informing the user of an alert (which may range from a simple beep, or a spoken message informing the user of a specific event, or a melody (if the user is able to recognize its meaning). Alternatively an actuator can be a vibration module present on a mobile phone together with specific drivers to have it activated upon the specific alert received by the end-user device (generally being different from that informing the user of an incoming call in case of e.g. a mobile phone). In other embodiments the end-user device (e.g. an intelligent pin) might contain an LCD device adapted to change color, upon receipt by this device of the alerting signal.

It is evident that the nature of the specific actuator implemented also depends on the end-user device itself.

The incoming alert signal A provided by an alert-providing service is usually transmitted to the end-user device by means of a communication network, which can be any type of wireless or wired communication network or any combination of such networks, e.g. wifi, USB, cellular system, or any combination of these networks e.g. a combination of fixed (e.g. fiber, copper), wireless (3G), in-house (wifi or USB or Ethernet) or the like.

The incoming alert signal is denoted in Fig. 1 as A. It is received within the end-user device D within a module denoted ECS being the abbreviation of "external communication subsystem" , thus providing device-and communications network specific communication functionality such as transmission/receipt of signals. This ECS module receives the incoming alert signal, in general together with all other incoming signals such as speech/data on a mobile phone or laptop, and is further able to distinguish the alert signals (from whichever specific application service they might have originated) from these other incoming signals (speech/data) not related to the alerting service, which alert signals are further transmitted to a module denoted ASM.

This alert sender ASM module is adapted to analyze the incoming alert signal A and to further translate it into a generic format that will be used within the end-user device, meaning that, from whichever service or application the actuation alert signal is received (e.g. a conference server, or a cloud server for warning of a birthday, or another service server from which such an alert signal can be expected) , it is translated into an internal-device specific signal, denoted A' in Fig. 1. In this way, many attention-alert-systems or attention-alert sources are thus able to communicate with the end-user device. The ASM module will therefore contain , for each of such subscribed alert services, a specific sub-block which can e.g. be downloaded from the service server once the user of the end-user device wants to subscribe to the alerting service. The ASM module further is able to discriminate, based on the information contained in A, which specific alerting service is concerned, upon which identification, the appropriate alert service translation module within ASM is selected for performing the translation from A to A'. These sub-modules are schematically denoted as ASM1 to ASMn on Fig. 1

This modified alert notification signal A' also contains information with respect to the specific service it is related to. A' is forwarded to a third module, denoted AAS, being the Attention Alert module. Signal A' may further contain information about the preferences of the specific attention-alert-service/system with regards to what actuators should be used. These preferences may have been previously communicated by the user to the alert service server, or alternatively the alert server may have determined them autonomously based on e.g. knowledge of the end-user device. For the exemplary case of a video conferencing application for example, for which a speaker wants to get informed of another participant at another location looking at him/her, such a preference may involve not using the loudspeaker of the end-user device itself for alerting the speaker as this would interrupt the video conversation. This information with respect to actuator preferences may thus be part of A' itself . AAS can nevertheless also autonomously decide whether or not to follow these preferences e.g. when these preferred actuators are not available, or have too little chance of their output to be perceived by the user, dependent on how the user is presently using his/her device at this time (e.g. screen is on, and user is touching the screen). Also more indirect information such as the output values of a built-in gyroscope in the end-user device to e.g. detect whether the user is walking, can be used for making this determination. Al this information is therefore used by AAS in order to determine which actuator or group of actuators (e.g. both pop up screen and vibration module) to activate by means of the provision of an appropriate trigger signal or signals to the selected actuator(s). The actuators also send their current status to AAS. It might, for example, not be interesting to have the screen be used as an actuator for the attention alert when the user is performing certain tasks on it.

On Fig. 1 the information provided by the actuators is denoted as, while the information provided by activity monitors of the end-user device is denoted ua.

The AAS will also send back the delivery status of the trigger signals by the actuators to the external alert server, so that the external server/application system knows whether and when the alert has been processed which possibly resulted in the generation of a user-perceivable output signal on one of the actuators, and, which possibly resulted in the user having actually noticed the alert. Implementation details of this delivery status process will be explained later.

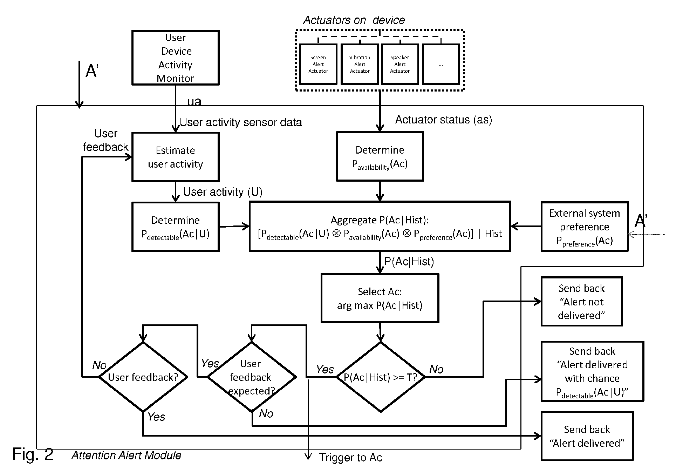

Figure 2 shows a more detailed flowchart of the AAS module.

This module gets activated upon receipt of a translated alert signal A'.

First of all the current user activity U is to be determined. In order to facilitate this, user activity sensors or monitors on the mobile device are used. These user activity sensors can e.g. detectors for checking whether the device is turned on, and/or detectors checking whether some haptic or sound input is received from the user, whether the user is inputting data etc.., These user activity sensors thus provide information whether and how the user is actually using his/her end-user device. In addition also other sensors e.g. related to where the device is located, such as an activated GPS module, or a gyroscopic sensor indicating whether the device is moving, can give information on some activities of the user, which are not directly relating to his/her specific end-user device usage, but which nevertheless can be of importance for determining the most appropriate actuator.

All information provided by the user device activity monitors is denoted ua on Fig. 2 (and Fig. 1) and is provided to a module for estimating the user activity U. In addition to ua, also a user feedback signal can be used by this module, using a feedback loop. This will be discussed in a later paragraph.

In an embodiment the user activity estimate output signal U may be determined in an heuristic manner, based on some rules. For instance if it is determined that the display/screen is not active while a gyroscopic sensor detects oscillating movements, the user activity U can be determined as "user walking while device is in non-usage mode" . Similarly when the display is lighted up and a ringing tone is activated it will be determined that the user is using his (mobile phone) device in "call receipt mode". A set of heuristic rules can thus be present per device, dependent upon the function of the device itself, the available sensors and the number of actuators. It may be remarked that in some embodiments the actuators and sensors share or even form part of the same physical device, such as in case of the display, so that only the relevant control logic is attributed to either "sensor" or "actuator" function .

The thus determined user activity U serves as an input for determining the probability that a certain actuator can be detected by the user. This probability value is denoted P_{detectable}(Ac|U) and thus denotes the detectable probability for actuator Ac under user conditions U, with U being the user activity. For instance, providing a message on the screen will not have much effect when the mobile device is in the users pocket, but it will have effect when the user is actively using the mobile device via its screen. Note that in this notation "Ac" can be a single actuator or group of actuators AA1 to AAi, e.g. vibration while putting something on the screen.

On the actuator side, it is also to be determined which actuators are most probably available. This determination is based upon information from the actuators themselves, via their provision of their actuator status signal as, and the output of this module is denoted, P_{availability}(Ac). The value of this probability can again be based on some heuristics, e.g. if the speaker of a mobile phone is active, P_{availability}(speaker)=0.

P_{availability}(AAi) thus indicates the availability of the actuator AAi; and in general P_{availability}(Ac) denotes the probability of availability of at least one (either one or a combination of) actuators Ac. By continuously checking and ranking these values an indication is obtained of which actuators are 'most' available over a certain time period. While for some actuators, such as a vibrator module, this value can be expressed as either 1 or 0 , indicating availability or not, for other actuators a value in between 0 and 1 can be more appropriate. This can for instance be the case for the display, which can be shared amongst several applications. Depending upon the specific application, this probability value can be different, e.g. a display used for web browsing can still be available for actuation alert for 50%-70%, while a display used for gaming may preferably not be available for providing alert messages. In another example, where a user has the option to either use the screen, or the speakers of the mobile device , the value of P_{availability}(Ac) may can indicate that the screen is less available because the user is already working on it, and putting something else on the screen might interfere with the workflow of the user.

A third stochastic variable can be derived from A' and could thus be incorporated within this signal by the external application system that provides the alert signals A itself, and which signal may thus contain information with respect to preferential use of some actuators. This preferential service-related information is thus extracted from A or A', and is denoted P_{preference}(Ac). For instance, if a service indicates actuator AA1 to be the most preferred, and AA3 the least preferred, this can be expressed by attributing a higher value to P_{preference}(AA1) compared to that of P_{preference}(AA3).

The service altert system can in this way also indicate whether certain actuators , e.g. AAi, are preferably not to be used, as was described earlier in the explanation of figure 1, by attributing a value of P_{preference}(AAi)=0.

These three stochastic variables are combined together in an aggregation step into a new stochastic distribution P(Ac) that combines the previous stochastic variables into a single one. In an embodiment it can also operate taking into account the condition of *"Hist";* thus being denoted P(Ac/Hist) with Hist denoting the history of sending alerts and their resulted choice of actuator(s), taking input account possible user feedback under the given parameters P_{availability}(Ac), P_{preference}(Ac) and P_{detectable}(Ac|U) , further taking into account at which time these alerts were received over a certain time period. This history is used to prevent the same actuator or combination of actuators from being used twice for the same alert, as multiple iterations are possible (this will be shown in a later paragraph). The history is also used for determining the user preferences by learning from this history. Thus different successive time periods can be continuously monitored to enable this learning.

The combination of these three variables into a single one can be based on various techniques. A simple way is to just take the average of the three values, or selecting the minimum of the three probability values for each actuator throughout the distributions, taking into account the history constraint; e.g. P(Ac|Hist) = [min(P_{detedable}(Ac|U), P_{availability}(Ac), P_{preference}(Ac))]|Hist.

The resulting P(Ac|Hist) is calculated for each actuator or combinations of them. Next the obtained values are then used to select the actuator with the highest probability, which is symbolically denoted by: arg max P(Ac|Hist). This probability is further compared with a threshold T; in order to prevent actuators that have too low probability of being used. If the probability is lower than T, a response is sent back stating that the alert was not delivered. Note that T could optionally also be influenced by the external system in order to tune the delivery of the alert when multiple personal devices are available.

If the probability P(Ac|Hist) >= T, actuator Ac is thus selected, and it is to be determined whether user feedback may be expected for this Ac. This feedback can be actuator dependent; e.g. when the user is expected to click away a notification on the screen, user feedback may be expected. When the actuator is a vibration motor, no feedback is expected in most cases. When no feedback is expected, the alert message is assumed to be delivered to the user via the vibration actuator, and its assumed detection by the user is thus also returned in the message, via the provision of Pdetectable(Ac|U) in the return message. This enable the alert service provision system to decide whether or not to again send another alert attempt to another end-user device e.g. in case more than 1 personal device was registered for the service alert notification.

When user feedback is expected, and user feedback was received, a message is sent back that states 'alert delivered'. When no user feedback was received however a feedback loop is activated and the information that a user did not respond to a certain actuator is taken into account for giving an updated estimate of the user activity (as the previous estimate might thus have been wrongly determined). Furthermore the *Hist* variable is updated in order to reflect this failed attempt, and to extend the time period. This enables the system to learn certain behavioral aspects of the user; e.g. that the user does not respond to alerts in certain situations. The AAS further iterates using this updated information, and can then possibly offer a better actuator for delivering this message. More iterations are possible. The AAS module will thus make sure that the user is triggered in an optimal, context sensitive manner taking into account both local- and global information. As such it is tuned to the context of the attention-alert system(s) together with the local mobile system.

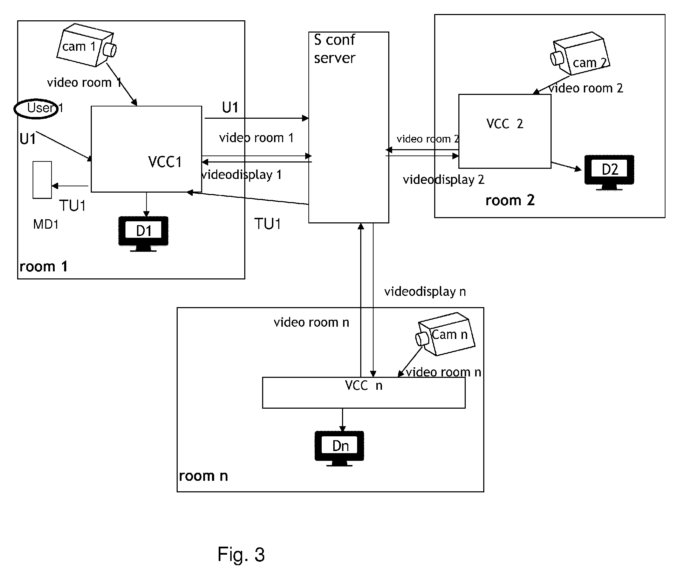

In an embodiment a system for determining video attention of a to be alerted participant, will send a trigger signal to this participant upon the video conferencing system having discovered this. This participant is in the example depicted in fig. 3 denoted user 1, and is sitting in room 1. The video conferencing server of the video conferencing system receives video information from the different locations, adapts it, and provides other video information back to these locations. When user 1 wants to get informed that other participants, in a different location, are paying visual attention to him or her, this participant may provides an input signal U1 to a video conferencing client part of the video conferencing system. This user input signal can also indicate to which end-user device the video conferencing system has to provide the alerting signal back. This can be the case in situations where this user has more than one end-user device coupled to the conferencing system e.g. a mobile phone and a laptop. The user can e.g. send the request U1 from his/her mobile phone, indicating to be alerted on his/her laptop, or vice versa, or can request the alert to be provided to both devices.

While the principles of the invention have been described above in connection with specific apparatus, it is to be clearly understood that this description is made only by way of example and not as a limitation on the scope of the invention, as defined in the appended claims.

## Claims

1. Method for selecting and activating at least one actuator (AC) of an end-user device (D) , said actuator being an output module of the end-user device which is adapted to inform a user of this device of an event related to a specific service upon receipt of an alert signal (A) by this end-user device (D), said method comprising the steps of
- determining an activity parameter (ua) related to the use of said end-user device (D),
- determining the actual status (as) of the usage of the actuators (Ac) of a plurality of actuators (AA1,...,AAi) of said end-user device (D) ,
- determining from the actual status of the usage of the actuators a probability (_{Pavailability}(Ac)) of availability of at least one actuator of said plurality,
- determining for the actuators of said plurality a stochastic parameter (P(Ac), P(Ac|Hist)) based on said activity parameter (ua) related to the use of said end-user device , on the probability (P_{availability}(Ac) ) of availability of said at least one actuator of said plurality, and upon external system preference values related to the usage of the actuators
- selecting and activating the at least one actuator (Ac) from said plurality for which said stochastic parameter is maximal.

2. Method according to claim 1 wherein the determination of said stochastic parameter involves the calculation of the probability that a certain actuator can be detected by the user.

3. Method according to claim 2 wherein the calculation of said probability that a certain actuator can be detected by the user is further based upon user feedback information of the use of the actuators of said plurality.

4. Method according to any of the previous claims 1-3 wherein the determination of the stochastic parameter (P(Ac|Hist)) is calculated over a predetermined period of time, taking into account the history of said activity parameter and said actual status of usage over said predetermined period of time.

5. End user device (D) adapted to receive an alert signal (A) from an alert source and to convey said alert signal to at least one actuator (Ac) of a plurality of actuators (AA1,AA2,...AAi) comprised within said end-user device and being output modules of the end-user device which are adapted to inform a user of this device of an event related to a specific service , said end-user device further comprising an attention alert module (AAs) being adapted to
- determine an activity parameter (ua) related to the use of said end-user device (D),
- determine the actual status (as) of the usage of the actuators (Ac) of a plurality of actuators (AA1 ,...,AAi) of said end-user device (D),
- determine from the actual status of the usage of the actuators a probability (P_{avaibbility}(Ac) ) of availability of at least one actuator of said plurality,
- determine for the actuators of said plurality a stochastic parameter (P(Ac), P(Ac|Hist)) based on said activity parameter (ua) related to the use of said end-user device , on the probability (P_{availability}(Ac) ) of availability of said at least one actuator of said plurality, and upon external system preference values related to the usage of the actuators ,
- select and activate the at least one actuator (Ac) from said plurality for which said stochastic parameter is maximal.

6. End-user device (D) according to claim 5 wherein said attention alert module (AAS) is adapted to extract said external system preference values from said alert signal (A), and is further adapted to calculate the probability that a certain actuator can be detected by the user.

7. End-user device (D) according to claim 5 or 6 wherein said attention alert module (AAS) is further adapted to calculate said probability that a certain actuator can be detected by the user based upon user feedback information of the use of the actuators of said plurality.

8. End-user device (D) according to any of the previous claims 5-7 wherein said attention alert module (ASS) is further adapted to determine the stochastic parameter (P(Ac|Hist)) over a predetermined period of time, taking into account the history of said activity parameter and said actual status of usage over said predetermined period of time.

9. End-user device (MD1) according to any of the previous claims 5-8 wherein said alert source is a video conferencing system , said end-user device (MD1) being further adapted to register itself to said video conferencing system, to provide a signal (U1) indicative of the user of said end-user device desiring to be alerted upon being watched by another participant in another location of a video conference in which said user is involved, said end-user device (MD1) being further adapted to identify whether a signal (TU1) received from said video conferencing client concerns a trigger signal being indicative of said user of said end-user device being watched by another participant in another location of said video conference, and, if so, to activate at least one of said actuators within said end-user device.

10. A computer program adapted to perform the method according to any of the claims 1 to 4.

11. A computer readable storage medium comprising instructions to cause a data processing apparatus to carry out the steps as set out in the method according to claims 1-4.

## Patentansprüche

1. Verfahren zum Auswählen und Aktivieren von mindestens einem Aktor (AC) eines Benutzerendgerätes (D), wobei besagter Aktor ein Ausgangsmodul des Benutzerendgerätes ist, das ausgelegt ist zum Informieren eines Benutzers des Gerätes über ein Ereignis in Bezug auf eine spezifische Dienstleistung beim Empfangen eines Alarmsignals (A) durch dieses Benutzerendgerät (D), wobei besagtes Verfahren die folgenden Schritte umfasst
- das Bestimmen eines Aktivitätsparameters (ua) in Bezug auf die Verwendung von besagtem Benutzerendgerät (D),
- das Bestimmen des aktuellen Status (as) der Nutzung der Aktoren (Ac) einer Vielzahl von Aktoren (AA1,..., AAi) von besagtem Benutzerendgerät (D) ,
- das Bestimmen aus dem aktuellen Status der Nutzung der Aktoren einer Wahrscheinlichkeit (P_{availability}(AC)) der Verfügbarkeit von mindestens einem Aktor von besagter Vielzahl,
- das Bestimmen für die Aktoren besagter Vielzahl eines stochastischen Parameters (P(Ac), P(Ac|Hist)) auf Basis besagter Aktivitätsparameter (ua) in Bezug auf die Verwendung besagten Benutzerendgerätes, der Wahrscheinlichkeit (P_{availability}(AC)) der Verfügbarkeit von besagtem mindestens einen Aktor besagter Vielzahl, und auf externen Systempräferenzwerten in Bezug auf die Nutzung der Aktoren,
- das Auswählen und Aktivieren von mindestens einem Aktor (Ac) von besagter Vielzahl, für die besagter stochastischer Parameter maximal ist.

2. Verfahren nach Anspruch 1, wobei das Bestimmen von besagtem stochastischem Parameter das Berechnen der Wahrscheinlichkeit involviert, dass ein bestimmter Aktor vom Benutzer erkannt werden kann.

3. Verfahren nach Anspruch 2, wobei das Berechnen besagter Wahrscheinlichkeit, dass ein bestimmter Aktor vom Benutzer erkannt werden kann, weiterhin basiert auf der Benutzerfeedbackinformation der Verwendung der Aktoren besagter Vielzahl.

4. Verfahren nach einem beliebigen der vorstehenden Ansprüche 1-3, wobei das Bestimmen des stochastischen Parameters P(Ac|Hist)) über einen vorbestimmten Zeitraum berechnet wird, unter Berücksichtigung des Verlaufs von besagtem Aktivitätsparameter und von besagtem aktuellen Status der Nutzung über besagten vorbestimmten Zeitraum.

5. Benutzerendgerät (D), ausgelegt zum Empfangen eines Alarmsignals (A) von einer Alarmquelle und zum Befördern besagten Alarmsignals an dem mindestens einen Aktor (Ac) einer Vielzahl von Aktoren (AA1, AA2,... AAi), umfasst innerhalb besagtem Benutzerendgerät, und Vorhandensein von Ausgangsmodulen des Benutzerendgeräts, die ausgelegt sind zum Informieren eines Benutzers dieses Geräts über ein Ereignis in Bezug auf eine spezifische Dienstleistung, wobei besagtes Benutzerendgerät weiterhin ein Aufmerksamkeits-Alarmmodul (AAs) umfasst, welches ausgelegt ist
- zum Bestimmen eines Aktivitätsparameters (ua) in Bezug auf die Verwendung von besagtem Benutzerendgerät (D),
- zum Bestimmen des aktuellen Status (as) der Nutzung der Aktoren (Ac) einer Vielzahl von Aktoren (AA1, ..., AAi) von besagtem Benutzerendgerät (D),
- zum Bestimmen vom aktuellen Status der Nutzung der Aktoren einer Wahrscheinlichkeit (P_{availability}(AC)) der Verfügbarkeit von mindestens einem Aktor besagter Vielzahl,
- zum Bestimmen für die Aktoren besagter Vielzahl eines stochastischen Parameters (P(Ac), P(Ac|Hist)) auf Basis besagter Aktivitätsparameter (ua) in Bezug auf die Verwendung besagten Benutzerendgerätes, der Wahrscheinlichkeit (P_{availability}(AC)) der Verfügbarkeit von besagtem mindestens einen Aktor besagter Vielzahl, und auf externen Systempräferenzwerten in Bezug auf die Nutzung der Aktoren,
- zum Auswählen und Aktivieren von mindestens einem Aktor (Ac) von besagter Vielzahl, für die besagter stochastischer Parameter maximal ist.

6. Benutzerendgerät (D) nach Anspruch 5, wobei besagtes Aufmerksamkeits-Alarmmodul (AAS) ausgelegt ist zum Extrahieren besagter externer Systempräferenzwerte von besagtem Alarmsignal (A), und weiterhin ausgelegt ist zum Berechnen der Wahrscheinlichkeit, dass ein bestimmter Aktor vom Benutzer erkannt werden kann.

7. Benutzerendgerät (D) nach Anspruch 5 oder 6, wobei besagtes Aufmerksamkeits-Alarmmodul (AAS) weiterhin ausgelegt ist zum Berechnen besagter Wahrscheinlichkeit, dass ein bestimmter Aktor vom Benutzer erkannt werden kann auf Basis der Benutzerfeedbackinformation über die Verwendung der Aktoren besagter Vielzahl.

8. Benutzerendgerät (D) nach einem beliebigen der vorstehenden Ansprüche 5-7, wobei besagtes Aufmerksamkeits-Alarmmodul (ASS) weiterhin ausgelegt ist zum Bestimmen des stochastischen Parameters P(Ac|Hist)) über einen vorbestimmten Zeitraum, unter Berücksichtigung des Verlaufs von besagtem Aktivitätsparameter und von besagtem aktuellen Status der Nutzung über besagten vorbestimmten Zeitraum.

9. Benutzerendgerät (MD1) nach einem beliebigen der vorstehenden Ansprüche 5-8, wobei besagte Alarmquelle ein Videokonferenzsystem ist, wobei besagtes Benutzerendgerät (MD1) weiterhin ausgelegt, um sich selbst in besagtem Videokonferenzsystem anzumelden, zum Bereitstellen eines Signals (U1), das anzeigt, ob der Benutzer besagten Benutzerendgerätes es wünscht, davon unterrichtet zu werden, wenn er von einem anderen Teilnehmer an einem anderen Ort einer Videokonferenz beobachtet wird, in welcher besagter Benutzer involviert ist, wobei besagtes Benutzerendgerät (MD1) weiterhin ausgelegt ist zum Identifizieren, ob ein Signal (TU1), das von besagtem Videokonferenzkunden empfangen wird, bedeutet, dass ein TriggerSignal indikativ dafür ist, dass besagter Benutzer besagten Benutzerendgerätes von einem anderen Teilnehmer an einem anderen Ort besagter Videokonferenz beobachtet wird und, falls dies der Fall ist, zum Aktivieren von mindestens einem der besagten Aktoren innerhalb besagtem Benutzerendgerät.

10. Computerprogramm, ausgelegt zum Durchführen des Verfahrens gemäß einem beliebigen der Ansprüche 1 bis 4.

11. Computerlesbares Speichermedium mit Befehlen, um zu bewirken, dass eine Datenverarbeitungseinrichtung die Schritte ausführt, die in dem Verfahren nach einem beliebigen der Ansprüche 1 bis 4 aufgeführt sind.

## Revendications

1. Procédé de sélection et d'activation d'au moins un activateur (AC) d'un dispositif d'utilisateur final (D), ledit activateur étant un module de sortie du dispositif d'utilisateur final qui est adapté pour informer un utilisateur de ce dispositif d'un événement relatif à un service spécifique dès réception d'un signal d'alerte (A) par ce dispositif d'utilisateur final (D), ledit procédé comprenant les étapes suivantes
- déterminer un paramètre d'activité (ua) relatif à l'utilisation dudit dispositif d'utilisateur final (D),
- déterminer l'état réel (as) de l'utilisation des activateurs (Ac) parmi une pluralité d'activateurs (AA1 ,...,AAi) dudit dispositif d'utilisateur final (D),
- déterminer à partir de l'état réel de l'utilisation des activateurs une probabilité (P_{availability}(Ac)) de disponibilité d'au moins un activateur parmi ladite pluralité d'activateurs,
- déterminer pour les activateurs parmi ladite pluralité d'activateurs un paramètre stochastique (P(Ac), P(Ac|Hist)) basé sur ledit paramètre d'activité (ua) relatif à l'utilisation dudit dispositif d'utilisateur final, sur la probabilité (P_{availability}(Ac)) de disponibilité dudit au moins un activateur parmi ladite pluralité d'activateurs, et sur des valeurs de préférence de système externe relatives à l'utilisation des activateurs,
- sélectionner et activer l'au moins un activateur (Ac) parmi ladite pluralité d'activateurs pour lequel ledit paramètre stochastique est maximal.

2. Procédé selon la revendication 1 dans lequel la détermination dudit paramètre stochastique implique le calcul de la probabilité qu'un certain activateur puisse être détecté par l'utilisateur.

3. Procédé selon la revendication 2 dans lequel le calcul de ladite probabilité qu'un certain activateur puisse être détecté par l'utilisateur est en outre basé sur des informations de retour de l'utilisateur sur l'utilisation des activateurs parmi ladite pluralité d'activateurs.

4. Procédé selon l'une quelconque des revendications précédentes 1 à 3 dans lequel la détermination du paramètre stochastique (P(Ac|Hist)) est calculée pendant une période prédéterminée, en tenant compte de l'historique dudit paramètre d'activité et dudit état réel d'utilisation par rapport à ladite période prédéterminée.

5. Dispositif d'utilisateur final (D) adapté pour recevoir un signal d'alerte (A) provenant d'une source d'alerte et pour acheminer ledit signal d'alerte vers au moins un activateur (Ac) parmi une pluralité d'activateurs (AA1,AA2,...AAi) compris dans ledit dispositif d'utilisateur final et étant des modules de sortie du dispositif d'utilisateur final qui sont adaptés pour informer un utilisateur de ce dispositif d'un évènement relatif à un service spécifique, ledit dispositif d'utilisateur final comprenant en outre un module d'alerte d'attention (AAs) adapté pour
- déterminer un paramètre d'activité (ua) relatif à l'utilisation dudit dispositif d'utilisateur final (D),
- déterminer l'état réel (as) de l'utilisation des activateurs (Ac) parmi une pluralité d'activateurs (AA1 ,...,AAi) dudit dispositif d'utilisateur final (D),
- déterminer à partir de l'état réel de l'utilisation des activateurs une probabilité (P_{availability}(Ac)) de disponibilité d'au moins un activateur parmi ladite pluralité d'activateurs,
- déterminer pour les activateurs parmi ladite pluralité d'activateurs un paramètre stochastique (P(Ac), P(Ac|Hist)) basé sur ledit paramètre d'activité (ua) relatif à l'utilisation dudit dispositif d'utilisateur final, sur la probabilité (P_{availability}(Ac)) de disponibilité dudit au moins un activateur parmi ladite pluralité d'activateurs, et sur des valeurs de préférence de système externe relatives à l'utilisation des activateurs,
- sélectionner et activer l'au moins un activateur (Ac) parmi ladite pluralité d'activateurs pour lequel ledit paramètre stochastique est maximal.

6. Dispositif d'utilisateur final (D) selon la revendication 5 dans lequel ledit module d'alerte d'attention (AAS) est adapté pour extraire lesdites valeurs de préférence de système externe dudit signal d'alerte (A), et est en outre adapté pour calculer la probabilité qu'un certain activateur puisse être détecté par l'utilisateur.

7. Dispositif d'utilisateur final (D) selon la revendication 5 ou 6 dans lequel ledit module d'alerte d'attention (AAS) est en outre adapté pour calculer ladite probabilité qu'un certain activateur puisse être détecté par l'utilisateur sur la base d'informations de retour de l'utilisateur sur l'utilisation des activateurs parmi ladite pluralité d'activateurs.

8. Dispositif d'utilisateur final (D) selon l'une quelconque des revendications précédentes 5 à 7 dans lequel ledit module d'alerte d'attention (ASS) est en outre adapté pour déterminer le paramètre stochastique (P(Ac|Hist)) pendant une période prédéterminée, en tenant compte de l'historique dudit paramètre d'activité et dudit état réel d'utilisation par rapport à ladite période prédéterminée.

9. Dispositif d'utilisateur final (MD1) selon l'une quelconque des revendications précédentes 5 à 8 dans lequel ladite source d'alerte est un système de visioconférence, ledit dispositif d'utilisateur final (MD1) étant en outre adapté pour s'enregistrer dans ledit système de visioconférence, pour délivrer un signal (U1) indiquant l'utilisateur dudit dispositif d'utilisateur final souhaitant être alerté lorsqu'il est regardé par un autre participant à un autre emplacement d'une visioconférence à laquelle ledit utilisateur participe, ledit dispositif d'utilisateur final (MD1) étant en outre adapté pour identifier si un signal (TU1) provenant dudit client de visioconférence concerne un signal de déclenchement indiquant ledit utilisateur dudit dispositif d'utilisateur final regardé par un autre participant à un autre emplacement de ladite visioconférence, et, si tel est le cas, pour activer au moins un desdits activateurs dans ledit dispositif d'utilisateur final.

10. Programme informatique adapté pour exécuter le procédé selon l'une quelconque des revendications 1 à 4.

11. Support de stockage lisible par un ordinateur comprenant des instructions pour entraîner l'exécution, par un appareil de traitement de données, des étapes telles que définies dans le procédé selon les revendications 1 à 4.
